# EUROPÄISCHE PATENTSCHRIFT

(11) **EP 1 368 727 B1**
(45) Veröffentlichungstag und Bekanntmachung des Hinweises auf die Patenterteilung: **31.05.2006**
(21) Anmeldenummer: 02714159.7
(22) Anmeldetag: 13.02.2002
(51) Int. Cl.: G06F 1/04, G06F 1/32

(54) **VORRICHTUNG UND VERFAHREN ZUM AUSFÜHREN VON OPERATIONEN MIT EINER EINSTELLBAREN GESCHWINDIGKEIT**
DEVICE AND METHOD TO CONDUCT OPERATIONS WITH AN ADJUSTABLE SPEED
DISPOSITIF ET PROCEDE DE MISE EN OEUVRE D'OPERATIONS A UNE VITESSE REGLABLE

(30) Priorität: 09.03.2001 DE 10111435
(43) Veröffentlichungstag der Anmeldung: 10.12.2003
(73) Patentinhaber: Infineon Technologies AG, 81669 München (DE)
(72) Erfinder: JANKE, Marcus, 81539 München (DE)
(74) Vertreter: Schoppe, Fritz
(86) Internationale Anmeldenummer: PCT/EP2002/001509
(87) Internationale Veröffentlichungsnummer: WO 2002/073382

(56) Entgegenhaltungen:
- US-A- 5 544 138
- US-A- 5 812 004
- YOUNG R ET AL: "ADAPTIVE CLOCK SPEED CONTROL FOR VARIABLE PROCESSOR LOADING" MOTOROLA TECHNICAL DEVELOPMENTS, MOTOROLA INC. SCHAUMBURG, ILLINOIS, US, Bd. 15, 1. Mai 1992 (1992-05-01), Seiten 43-44, XP000306138

## Beschreibung

Die vorliegende Erfindung bezieht sich auf Vorrichtungen und Verfahren zum Ausführen von Operationen mit einer einstellbaren Geschwindigkeit und insbesondere auf Vorrichtungen und Verfahren zum Ausführen von kryptographischen Operationen mit einer einstellbaren Geschwindigkeit.

In vielen Anwendungen finden kryptographische Berechnungen mit besonders schützenswerten Geheimnissen, wie beispielsweise Schlüsseln oder proprietären Algorithmen, statt. Einige Beispiele hierfür sind der Zahlungsverkehr per "electronic cash", die Übermittlung von Daten über das Internet, die Mobiltelephonie, etc. Zur Vermeidung von wirtschaftlichen Schäden durch einen Mißbrauch geheimer Daten durch unbefugte Dritte und zum Schutz der Privatsphäre von Verbrauchern werden dabei Daten aller Art mittels einer Vielzahl kryptographischer Verfahren beim Absender verschlüsselt und beim Empfänger der Daten entschlüsselt. Dritte benötigen den in der Regel zunächst nur dem Absender und dem Empfänger bekannten Schlüssel, um die Daten entschlüsseln und die enthaltenen Informationen nutzen zu können. Es existieren zahlreiche Verfahren und Algorithmen, um diese Schlüssel zu gewinnen, die durch einschlägige Kreise ständig weiterentwickelt werden. Zur Abwehr solcher "Angriffe" werden auch die Verschlüsselungsverfahren ständig weiter entwickelt, insbesondere z. B. dahingehend, daß das theoretisch mögliche Gewinnen des Schlüssels eine so große Anzahl kryptographischer Berechnungen bzw. Operationen benötigt, daß diese mit der verfügbaren Rechenleistung nur innerhalb sehr langer Zeitdauern möglich ist. Ein Nachteil besteht darin, daß auch die kryptographischen Berechnungen zur Verschlüsselung bzw. legalen Entschlüsselung einen immer größeren Rechenaufwand erfordern.

Alternativ dazu kann unter anderem die Anzahl der "Versuche" beschränkt werden, wie z. B. bei der Eingabe der PIN einer EC-Karte oder eines Mobiltelephons. Dies ist allerdings nur in Fällen wie den genannten sinnvoll, in denen bis zu einem Verlust ausschließlich der legale Benutzer die PIN eingeben kann und somit eine Schädigung des legalen Benutzers durch eine Sperrung aufgrund von PIN-Eingabe-Versuchen Dritter ausgeschlossen ist.

Die US 5,812,004 befaßt sich mit einer Vorrichtung, die auf einem Mikroprozessor basiert und angepaßt ist, um mit verschiedenen Host-Leistungsquellen verbunden zu werden, wobei der Vorrichtung durch den Host Leistung bereitgestellt wird. Da verschiedene Hosts verschiedene Spannungen und Ströme für den Betrieb der Vorrichtung bereitstellen, soll die Vorrichtung mit verschiedenen Spannungen und Strömen betreibbar sein. Es wird ein Taktsignal vorgeschlagen, dessen Geschwindigkeit abhängig von dem verfügbaren Strom einer Host-Leistungsquelle variiert. Eine Schaltung wählt einen Betriebsstrom, bei dem die Vorrichtung mit der höchstmöglichen Taktgeschwindigkeit, bei der die Versorgungsspannung nicht unter eine vorbestimmte Spannung abfällt, betrieben wird. Die vorbestimmte Spannung ist die niedrigste Spannung, die erforderlich ist, um die Vorrichtung verläßlich zu betreiben. Damit wird bei einer limitierten Spannung und/oder einem limitierten Strom eine Berechnung so schnell wie möglich durchgeführt.

Die US 5,544,138 beschreibt zur Erzielung eines optimalen Gleichgewichtes zwischen einem reduzierten Leistungsverbrauch und einer unmittelbaren Verfügbarkeit eines Plattenlaufwerks die Messung einer Energieverbrauch-History bzw. die Aufzeichnung eines vergangenen Energieverbrauchs, um die Wahrscheinlichkeit eines bevorstehenden Zugriffes auf die Platte zu ermitteln, sowie die Einrichtung von Betriebsmodi in der Steuerelektronik mit reduziertem Leistungsverbrauch durch reduzierte Taktraten. Gemäß einem Ausführungsbeispiel fließt die Versorgungsleistung eines Plattenlaufwerksystems durch einen Widerstand, dessen Temperatur das gedämpfte zeitliche Mittel der durch das System verbrauchten Leistung darstellt. Wenn die durch einen thermischen Sensor erfaßte Temperatur des Widerstandes Schwellen T₁, T₂ über- oder unterschreitet, wird eine Leistungsversorgung für eine Steuerelektronik (bei T₁) bzw. einen Spindelmotor des Plattenlaufwerksystems (bei T₂) an- bzw. ausgeschaltet. Gemäß weiteren Ausführungsbeispielen wird die Energieverbrauchs-History digital gespeichert und berechnet oder mittels eines Kondensators gespeichert und gemittelt, der durch einen zur verbrauchten Energie proportionalen Strom geladen und durch einen vorbestimmten Strom entladen wird.

Der Artikel "Adaptive Clock Speed Control For Variable Processor Loading" von R. Young et al. (Motorola Technical Developments, Motorola Inc., Schaumburg, Illinois, US, Band 15, Mai 1993, Seiten 43, 44) schlägt zur Reduzierung eines mittleren Stromverbrauches eines Prozessors vor, dessen Taktoszillatorgeschwindigkeit zu minimieren. Jedem Task bzw. jeder Aufgabe des Prozessors wird ein Leistungsindex zugeordnet, der angibt, welcher Anteil des Prozessors zum Vollenden der Aufgabe erforderlich ist, wenn der Prozessor mit der maximalen Taktfrequenz betrieben wird. Die Summe der Leistungsindizes aller aktiven Aufgaben stellt den Bruchteil der maximalen Taktfrequenz dar, der erforderlich ist, um alle aktiven Aufgaben zu vollenden. Der programmierbare Prozessortaktgeber wird dann auf diese neue Frequenz eingestellt.

Die Aufgabe der vorliegenden Erfindung besteht darin, eine Vorrichtung und ein Verfahren zu schaffen, um kryptographische Berechnungen in einem Prozessor vor einer Entschlüsselung zu sichern.

Diese Aufgabe wird durch eine Vorrichtung gemäß Anspruch 1 oder ein Verfahren gemäß Anspruch 13 gelöst.

Der vorliegenden Erfindung liegt die Erkenntnis zugrunde, daß in der Praxis bei der überwiegenden Mehrheit der Anwendungen von kryptographischen Berechnungen diese Berechnungen nur mit langem zeitlichen Abstand aufgerufen werden. So wird bei Zahlungsfunktionen die Authentifikation bzw. die Signatur der Transaktion nur pro Aktion einmal aufgerufen. Zwischen zwei Zahlungen vergehen dabei relativ lange Zeitabschnitte, sogar bei Anwendungen wie beispielsweise Buchungen von Telephoneinheiten. Um Angriffe, die eine Vielzahl von kryptographischen Berechnung bzw. geheimen Operationen benötigen, bzw. ihre Durchführung in kurzer Zeit zu unterbinden, wird die Geschwindigkeit einer Abarbeitung dieser Berechnungen bzw. Operationen gesteuert. Je mehr Berechnungen bzw. Operationen stattfinden, desto langsamer finden diese statt.

Beispielsweise lädt jede kryptographische Berechnung einen Energiespeicher, welcher die Geschwindigkeit der Abarbeitung bestimmt. Das Verhältnis kann hierbei umgekehrt proportional oder, wenn möglich, sogar umgekehrt exponentiell sein. Die Erfindung bietet somit Schutz vor Angriffen, wie beispielsweise Power-Analysis (unter anderem DPA), bei der viele Berechnungen durchgeführt werden müssen, oder Brute-Force, bei der der Schlüssel durch systematisches Probieren aller Möglichkeiten bis zum Erfolg ermittelt wird. Die genannten Angriffe benötigen durch die Erfindung erheblich mehr Zeit und können im Idealfall aufgrund des erhöhten Zeitaufwandes sogar undurchführbar werden.

Die vorliegende Erfindung schafft einen Prozessor mit einem Rechenwerk zum Ausführen einer Operation mit einer Geschwindigkeit und eine Zustandseinrichtung, die einen Zustand aufweist, der sich ansprechend auf das Ausführen einer Operation durch das Rechenwerk ändert, wobei die Geschwindigkeit des Rechenwerks abhängig von dem Zustand der Zustandseinrichtung steuerbar ist. In kryptographischen Anwendungen verhindert der erfindungsgemäße Prozessor wirksam Angriffe, die eine Vielzahl von kryptographischen Berechnungen bzw. Operationen benötigen, indem er den Zeitaufwand für ihre Ausführung wesentlich oder sogar bis zur Undurchführbarkeit verlängert, führt aber legale Operationen, die relativ seltener stattfinden, praktisch ohne Geschwindigkeitsverlust durch, indem er sie in geringer Anzahl ungebremst bzw. fast ungebremst ausführt. Ein hoher Anwenderkomfort bleibt dabei weitgehend erhalten.

Ein anderes Ausführungsbeispiel des erfindungsgemäßen Prozessors ermöglicht eine Anpassung der Rechenleistung des Prozessors an gegebene Anforderungen, indem die Geschwindigkeit der Ausführung von Operationen erhöht wird, wenn Operationen ausgeführt werden, so daß umgekehrt die Geschwindigkeit verringert wird, wenn keine Operation ausgeführt wird, und somit beispielsweise eine Energieersparnis realisierbar ist.

Die Zustandseinrichtung des erfindungsgemäßen Prozessors kann einen kontinuierlichen bzw. analogen bzw. stufenlosen Zustand aufweisen. Der Zustand der Zustandseinrichtung kann sich ansprechend auf das Ausführen einer Operation so ändern, daß sich die Geschwindigkeit des Rechenwerkes verringert. Der Zustand der Zustandseinrichtung kann ferner eine Funktion der Zeit sein. Vorzugsweise kann der Zustand der Zustandseinrichtung, wenn keine Operation ausgeführt wird, in eine Richtung änderbar sein, welche der Richtung der Änderung in Ansprache auf das Ausführen einer Operation entgegengesetzt ist. Der Zustand der Zustandseinrichtung kann durch eine Variable dargestellt sein, die bei jeder Ausführung einer Operation um einen festgelegten Wert erhöht wird, wobei die Geschwindigkeit des Rechenwerkes umgekehrt proportional oder umgekehrt exponentiell zu dieser Variable sein kann.

Gemäß einem bevorzugten Ausführungsbeispiel ist die Zustandseinrichtung des erfindungsgemäßen Prozessors ein Kondensator, und ist der Zustand ein Ladezustand des Kondensators.

Gemäß einem weiteren bevorzugten Ausführungsbeispiel des erfindungsgemäßen Prozessors ist die Zustandseinrichtung eine Einrichtung mit einer Wärmekapazität, und ist der Zustand eine Temperatur der Einrichtung. Die Verwendung einer analogen Zustandseinrichtung verringert die Möglichkeit einer Manipulation durch unbefugte Dritte weiter. Die Zustandseinrichtung kann, insbesondere in ihrer Ausführung als Kondensator oder Einrichtung mit Wärmekapazität, mit dem Prozessor einstückig ausgeführt sein, wodurch eine Manipulation weiter erschwert wird.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Prozessors gemäß der vorliegenden Erfindung;
- Fig. 2: eine schematische Darstellung eines Prozessors gemäß einem ersten Ausführungsbeispiel der vorliegenden Erfindung;
- Fig. 3: eine schematische Darstellung eines Prozessors gemäß einem zweiten Ausführungsbeispiel der vorliegenden Erfindung; und
- Fig. 4: eine schematische Darstellung eines Prozessors gemäß einem dritten Ausführungsbeispiel der vorliegenden Erfindung.

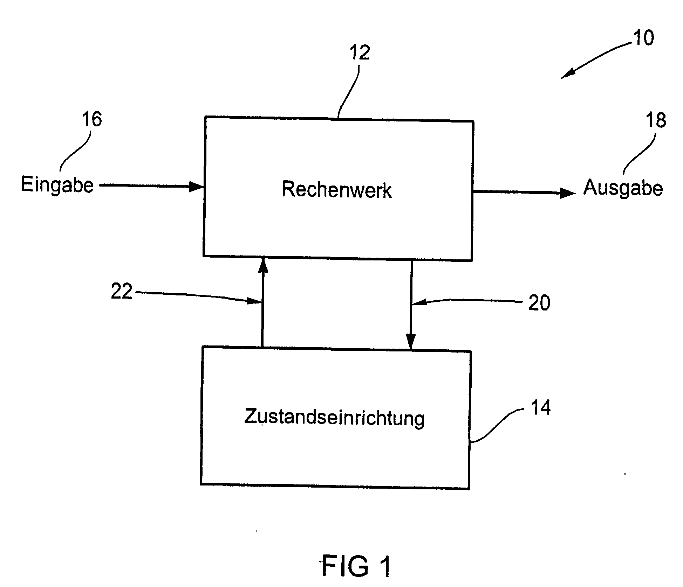

Fig. 1 zeigt eine schematische Darstellung eines Prozessors 10 mit einem Rechenwerk 12 und einer Zustandseinrichtung 14. Das Rechenwerk 12 führt ansprechend auf eine Eingabe 16 eine Operation aus und erzeugt eine Ausgabe 18. Das Rechenwerk 12 ist über eine Verbindungseinrichtung 20 mit der Zustandseinrichtung 14 wirksam verbunden, so daß ansprechend auf das Ausführen einer Operation im Rechenwerk 12 ein Zustand der Zustandseinrichtung 14 geändert wird. Ferner ist das Rechenwerk 12 über eine Verbindungseinrichtung 22 mit der Zustandseinrichtung 14 derart wirksam verbunden, daß eine Geschwindigkeit des Ausführens einer Operation im Rechenwerk 12 von dem Zustand der Zustandseinrichtung 14 abhängig ist.

Der Prozessor kann ein beliebiger Prozessor sein, der abgesehen von den hier beschriebenen Eigenschaften und Merkmalen einen beliebigen Aufbau, wie er in der Technik bekannt ist, und beliebige Leistungsmerkmale aufweist. Es kann sich beispielsweise um einen Krypto-Coprozessor, um einen Prozessor, wie er bei "electronic cash"-Zahlungsverfahren oder in der Mobiltelephonie eingesetzt wird, etc. handeln. Die Erfindung ist insbesondere auch darauf gerichtet, im Falle eines Prozessors, der unbefugten Dritten mechanisch verfügbar, d. h. einer mechanischen und/oder elektrischen Manipulation ausgesetzt sein kann, einen besseren Schutz vor einer erfolgreichen Manipulation zu bieten.

Die Zustandseinrichtung 14 kann eine beliebige Zustandseinrichtung mit einem änderbaren Zustand sein. Vorzugsweise ist die Zustandseinrichtung 14 eine analoge Zustandseinrichtung mit einem beliebigen analogen bzw. kontinuierlichen bzw. stufenlosen Zustand. Insbesondere kann es sich bei der Zustandseinrichtung 14 um einen Energiespeicher handeln, wobei die gespeicherte Energiemenge den Zustand darstellt. Ausgehend von einem Ursprungszustand wird bei jeder Berechnung bzw. bei jedem Ausführen einer Operation durch das Rechenwerk 12 mittels einer geeigneten Vorrichtung eine Energiemenge in der Zustandseinrichtung gespeichert. Das bedeutet, daß nach mehreren Nutzungen der angeschlossenen Schaltung bzw. Ausführungen von Operationen in dem mit der Zustandseinrichtung 14 wirksam verbundenen Rechenwerk eine erhöhte Energie im Speicher vorliegt. Durch physikalische Effekte kann diese Energie in der Regel nicht beliebig lange gespeichert werden, es kommt somit zu einem langsamen, kontinuierlichen Rücksetzvorgang des Speichers zu dem Ruhezustand. Entscheidend ist nun die Kopplung der Arbeitsgeschwindigkeit des mit der Zustandseinrichtung 14 wirksam verbundenen Rechenwerkes 12 mit dem Energiespeicher. Je mehr an Energie akkumuliert wurde, desto geringer wird die Geschwindigkeit des Rechenwerkes 12 eingestellt bzw. desto langsamer findet die Berechnung statt. Optimal sind hierbei besonders exponentielle Funktionen, da diese es ermöglichen, wenige Berechnungen relativ schnell durchzuführen, wonach die Abarbeitung massiv gebremst wird und theoretisch sogar unendlich lange dauern würde. Durch einen unabhängigen Energiespeicher wird es verhindert, daß durch äußere Einflüsse, wie z. B. durch ein Abschalten einer Versorgungsspannung, der Effekt z. B. durch einen unbefugten Angreifer außer Betrieb genommen wird.

Beispiele für eine analoge Zustandseinrichtung 14 sind ein Kondensator und eine Einrichtung mit einer Wärmekapazität, die in den Ausführungsbeispielen unten detaillierter beschrieben werden. Beispiele für die Wirkung der Ausführung einer Operation im Rechenwerk 12 auf den Zustand der Zustandseinrichtung 14 und für eine Steuerung der Geschwindigkeit des Rechenwerkes 12 durch den Zustand der Zustandseinrichtung 14 werden ebenfalls in den Ausführungsbeispielen unten detaillierter beschrieben.

Das Rechenwerk 12 und die Zustandseinrichtung 14 können getrennt angeordnete Bauelemente sein, sind aber vorzugsweise gemeinsam innerhalb eines Prozessorgehäuses angeordnet oder sogar einstückig ausgeführt. Eine einstückige Ausführung verringert ferner den Aufwand und die Kosten der Herstellung sowie die Größe des erfindungsgemäßen Prozessors und verbessert seine Eigenschaften, insbesondere seine Robustheit gegenüber äußeren Einflüssen. Vorallem erschwert eine einstückige Ausführung des Rechenwerks 12 und der Zustandseinrichtung 14 eine Manipulation durch unbefugte Dritte.

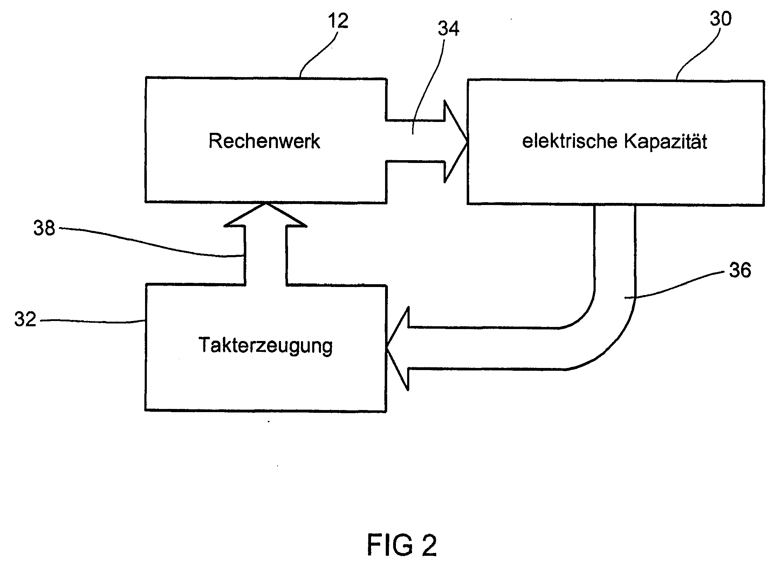

Fig. 2 zeigt eine schematische Darstellung eines ersten Ausführungsbeispieles der vorliegenden Erfindung. Dieses Ausführungsbeispiel entspricht dem Ansatz, elektrische Energie in einem Kondensator zu speichern. Die Zustandseinrichtung umfaßt einen Kondensator bzw. eine Einrichtung 30 mit einerelektrischen Kapazität und eine Takterzeugungseinrichtung 32, die untereinander und mit dem Rechenwerk 12 wirksam verbunden sind. In einem Ursprungszustand trägt die Einrichtung 30 mit einer elektrischen Kapazität keine Ladung. Bei einer Ausführung einer Operation durch das Rechenwerk 12 wird kontrolliert durch einen Schaltvorgang eines FET die elektrische Kapazität 30 aufgeladen. Durch den Einsatz dieses Kondensators als frequenzbestimmendes Element eines Oszillators oder einer PLL-Teilung, welcher als Taktgeber für den Schaltungsteil d. h. den Kryptoprozessor oder Kryptocoprozessor dient, kann die Kopplung mit der Arbeitsgeschwindigkeit einfach erfolgen.

Der Pfeil 34 stellt das durch ein Ausführen einer Operation im Rechenwerk 12 ausgelöste Laden der elektrischen Kapazität 30 dar. Bei jedem Ausführen einer Operation durch das Rechenwerk 12 wird die Ladung der elektrischen Kapazität 30 um einen vorbestimmten Wert erhöht. Die in der elektrischen Kapazität 30 enthaltene Ladung ist somit ein direktes Maß für die Anzahl der durch das Rechenwerk 12 ausgeführten Operationen. Abhängig von der Größe dieser Ladung wird eine Frequenz einer Takterzeugung durch die Takterzeugungseinrichtung 32 für das Rechenwerk 12 so gesteuert (Pfeil 36), daß die Frequenz der Takterzeugung um so niedriger ist, je größer die Ladung der elektrischen Kapazität 30 ist. Da der von der Takterzeugungseinrichtung 32 erzeugte Takt bzw. seine Frequenz die Geschwindigkeit der Ausführung einer Operation durch das Rechenwerk 12 unmittelbar beeinflußt (Pfeil 38), wird so erreicht, daß die Geschwindigkeit einer Ausführung einer Operation durch das Rechenwerk 12 umso stärker verringert wird, je mehr Operationen durch das Rechenwerk 12 ausgeführt wurden.

Eine Entladung der elektrischen Kapazität 30 durch Leckströme oder einen parallel geschalteten Widerstand versetzt die Zustandseinrichtung nach einer definierten Zeit zurück in den Ursprungszustand. Eine Verringerung der Geschwindigkeit des Rechenwerkes 12 aufgrund eines Ausführens von einer oder mehreren Operationen durch das Rechenwerk 12 wirkt somit nur während einer Zeit, die im wesentlichen durch die Anzahl der ausgeführten Operationen, die Größe der elektrischen Kapazität 30 und die Größe eines Leckströme, d. h. eines zu der Kapazität parallelen, z. B. parasitären Widerstandes bestimmt ist. Nach dem Ausführen von Operationen durch das Rechenwerk 12 und dem dadurch hervorgerufenen Verringern der Geschwindigkeit steigt deshalb die Geschwindigkeit des Rechenwerkes 12 allmählich wieder auf ihren Ursprungswert.

Wenn erneut eine Anzahl von Operationen ausgeführt wird, sinkt die Geschwindigkeit wieder ab, um das Ausführen einer größeren Anzahl von Operationen wirkungsvoll zu verzögern.

Eine bevorzugte Anwendung des vorliegenden Ausführungsbeispieles ist das Ausführen kryptographischer Berechnungen zum Verschlüsseln bzw. Entschlüsseln geheimer Daten, um diese vor dem Zugriff unbefugter Dritter zu schützen. In der Praxis werden bei einer Mehrheit von kryptographischen Anwendungen. die kryptographischen Operationen nur mit langem zeitlichen Abstand aufgerufen. Zum Beispiel wird bei Zahlungsfunktionen die Authentifikation bzw. die Signatur der Transaktion nur pro Aktion einmal aufgerufen. Zwischen zwei Zahlungen vergehen dabei relativ lange Zeitabschnitte, sogar bei Anwendungen wie beispielsweise Buchungen von Telephoneinheiten. Diese einzelnen, zeitlich beabstandeten Ausführungen von Operationen erfolgen bei dem Prozessor gemäß dem ersten Ausführungsbeispiel mit hoher Geschwindigkeit, d. h. geringem Zeitaufwand und für einen Anwender komfortabel. Hingegen wird im Falle eines Angriffes, der eine Vielzahl von kryptographischen Operationen benötigt, die Geschwindigkeit des Ausführens durch das Rechenwerk 12 verringert, so daß diese Operationen nicht mehr in kurzer Zeit durchgeführt werden können und im Idealfall deshalb sogar undurchführbar werden. Die vorliegende Erfindung vereint somit eine hohe Leistung bei legalen Anwendungen mit einem guten Schutz vor Manipulation und Angriffen.

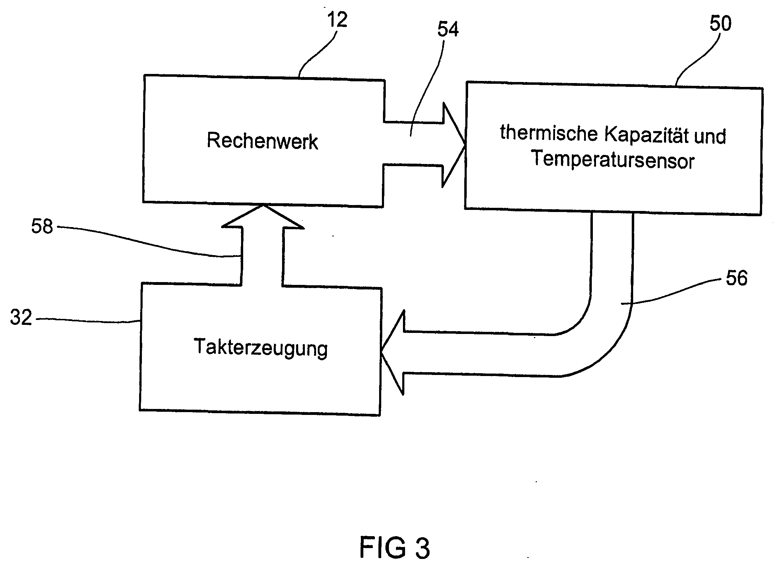

Bei einem alternativen Ausführungsbeispiel wird Energie in Form von thermischer Energie gespeichert. Fig. 3, zeigt eine schematische Darstellung eines Prozessors gemäß diesem zweiten Ausführungsbeispiel der vorliegenden Erfindung. Die Zustandseinrichtung umfaßt eine thermische Kapazität 50 mit einem Temperatursensor und eine Takterzeugungseinrichtung 32, die untereinander und mit dem Rechenwerk 12 wirksam verbunden sind. Das zweite Ausführungsbeispiel unterscheidet sich somit vom ersten Ausführungsbeispiel darin, daß die elektrische Kapazität 30 durch eine thermische Kapazität 50 ersetzt ist. Ansprechend auf ein Ausführen einer Operation in dem Rechenwerk 12 wird der thermischen Kapazität 50 Energie zugeführt (Pfeil 54) und somit ihre Temperatur erhöht. Dies kann mittels eines elektrischen Heizwiderstandes erfolgen, vorzugsweise aber durch die Abwärme des Rechenwerkes 12 über eine wärmeleitfähige Verbindung. Die thermische Kapazität 50 umfaßt einen Temperatursensor, dessen Ausgangssignal an die Takterzeugungseinrichtung 32 geleitet wird (Pfeil 56). Das Signal des Temperatursensors steuert in der Takterzeugungsvorrichtung 32 die Frequenz des erzeugten Arbeitstaktes für das Rechenwerk 12. Durch den in der Takterzeugungseinrichtung 32 erzeugten Arbeitstakt wird das Rechenwerk 12 gesteuert (Pfeil 58) .

Ansprechend auf das Ausführen einer Operation durch das Rechenwerk 12 wird die thermische Kapazität 50 erwärmt, und ihre Temperatur erhöht sich. Die Erhöhung der Temperatur der thermischen Kapazität 50 hat eine Änderung des Ausgangssignales des Temperatursensors zur Folge. Die Takterzeugungseinrichtung 32 ist so aufgebaut, daß diese Änderung des Ausgangssignales des Temperatursensors eine Verringerung der Frequenz des von der Takterzeugungseinrichtung 32 erzeugten Arbeitstaktes für das Rechenwerk 12 bewirkt. Somit hat eine Ausführung einer Operation durch das Rechenwerk 12 eine Verringerung der Geschwindigkeit des Rechenwerkes 12 zur Folge. Durch einen Wärmeübertrag von der thermischen Kapazität 50 auf ihre Umgebung geht die Temperatur der thermischen Kapazität 50 nach dem Ausführen einer Operation durch das Rechenwerk 12 allmählich wieder zurück. Dies bewirkt eine weitere Änderung des Ausgangssignales des Temperatursensors. Diese Änderung hat in der Takterzeugungseinrichtung 32 eine Erhöhung der Frequenz des Arbeitstaktes für das Rechenwerk 12 zur Folge. Die Frequenz des Arbeitstaktes bestimmt direkt und unmittelbar die Geschwindigkeit des Rechenwerkes 12. Somit steigt die Geschwindigkeit des Rechenwerkes 12 nach dem Ausführen einer Operation und der dadurch verursachten Verringerung der Geschwindigkeit allmählich wieder an.

Die thermische Kapazität 50 kann mit dem Rechenwerk 12 identisch sein. Bei jedem Ausführen einer Operation wird z. B. durch Verlustwärme oder mittels eines elektrischen Heizwiderstandes das Rechenwerk 12 erwärmt. Ein Temperatursensor kann beispielsweise auf Silizium sehr einfach und preiswert realisiert werden. Er mißt die Temperatur des Rechenwerkes und erzeugt ein diese Temperatur darstellendes Ausgangssignal, das wie beschrieben zur Steuerung der Takterzeugungseinrichtung dient. Je größer die Temperatur des Temperatursensors ist, desto langsamer wird der Arbeitstakt geschaltet. Ist auch die Takterzeugungseinrichtung 32 mit dem Rechenwerk 12 einstückig ausgeführt, dann ist der Prozessor mit allen erfindungsgemäßen Merkmalen einstückig und eine Manipulation wird weitgehend erschwert. Die Verwendung von aktiver Siliziumfläche als Wärmespeicher bietet darüber hinaus einen automatischen Schutz gegen das Verringern der Wärmekapazität durch Materialabtragungen durch einen Angreifer.

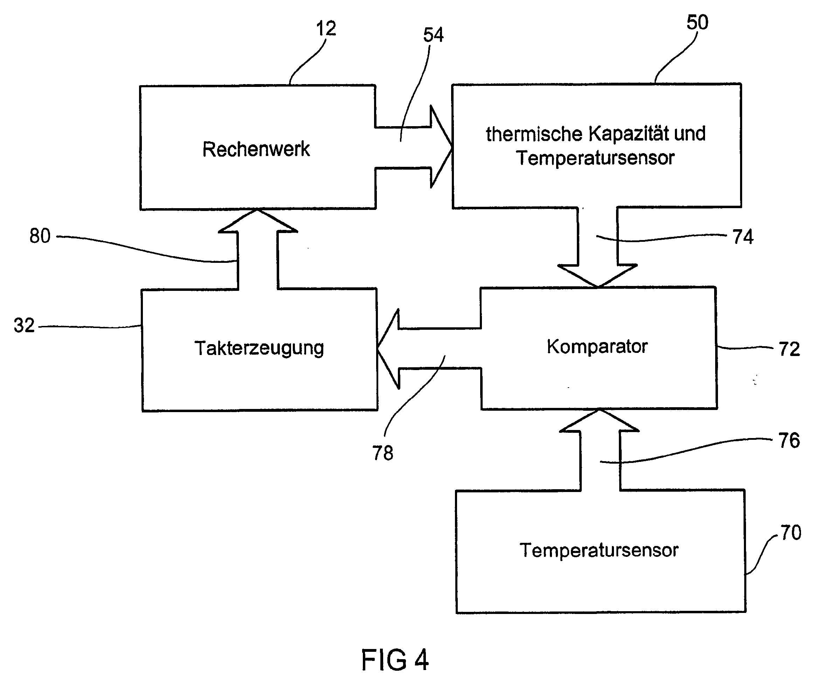

Fig. 4 zeigt eine schematische Darstellung eines dritten Ausführungsbeispieles der vorliegenden Erfindung. Das dritte Ausführungsbeispiel unterscheidet sich vom zweiten Ausführungsbeispiel dadurch, daß es außer einem Rechenwerk 12, einer thermischen Kapazität 54 mit einem ersten Temperatursensor und einer Takterzeugungseinrichtung 32 einen zweiten Temperatursensor 70 und einen Komparator 72 aufweist. Die Ausgangssignale des ersten Temperatursensors und des zweiten Temperatursensors 70 werden zum Komparator 72 geleitet (Pfeile 74, 76). Der Komparator 72 erzeugt ansprechend auf die Ausgangssignale der beiden Temperatursensoren ein Differenzsignal, das die Differenz der Ausgangssignale darstellt und zur Takterzeugungseinrichtung 32 geleitet wird (Pfeil 78). In der Takterzeugungseinrichtung 32 wird ansprechend auf das Differenzsignal ein Arbeitstakt für das Rechenwerk 12 erzeugt.

Der zweite Temperatursensor 70 dient zur Ermittlung einer Referenztemperatur. Der zweite Temperatursensor 70 kann beispielsweise an einem von dem ersten Temperatursensor entfernten Ort an der thermischen Kapazität 54 angebracht sein. Das von dem Komparator 72 aus den Temperatursignalen der beiden Temperatursensoren erzeugte Differenzsignal stellt dann einen mittleren Temperaturgradienten zwischen den beiden Orten der beiden Temperatursensoren dar. Vorzugsweise ist die thermische Kapazität 54 mit dem Rechenwerk 12 identisch, und sind der erste Temperatursensor und der zweite Temperatursensor 70 an zwei Orten im Rechenwerk 12 angebracht, die sich beim Ausführen einer Operation durch das Rechenwerk 12 unterschiedlich stark bzw. unterschiedlich schnell erwärmen, beispielsweise da sie von einem Ort, an dem Verlustwärme entsteht, unterschiedlich weit entfernt sind.

Beim Ausführen einer Operation durch das Rechenwerk 12 entsteht durch die dabei anfallende Verlustwärme, die langsam zur Oberfläche des Rechenwerkes 12 geleitet und dort an die Umgebung abgegeben wird, eine Temperaturdifferenz zwischen den Temperaturen an den Orten der beiden Temperatursensoren. Es resultiert eine Differenz zwischen den Ausgangssignalen der beiden Temperatursensoren. Der Komparator 72 erzeugt ein nicht verschwindendes Differenzsignal. Dieses Differenzsignal bewirkt in der Takterzeugungseinrichtung 32 eine Verringerung der Frequenz des Arbeitstaktes, der für das Rechenwerk 12 erzeugt wird. Die Verringerung der Frequenz des Arbeitstaktes für das Rechenwerk 12 hat direkt und unmittelbar eine Verringerung der Geschwindigkeit des Rechenwerkes zur Folge. Nach dem Ausführen einer Operation durch das Rechenwerk 12 kehrt die thermische Kapazität 54 allmählich wieder in einen Zustand eines thermischen Gleichgewichtes zurück. Damit verschwinden die Differenz der Temperaturen der Temperatursensoren und die Differenz der Ausgangssignale der Temperatursensoren. In der Folge geht das vom Komparator 72 erzeugte Differenzsignal auf Null zurück, das in der Takterzeugungseinrichtung 32 eine Steuerung der Frequenz des Arbeitstaktes bewirkt. Die Takterzeugungseinrichtung 32 ist so aufgebaut, daß ein verringertes Differenzsignal eine erhöhte Frequenz bewirkt. Somit steigt die Geschwindigkeit des Rechenwerkes 12 nach einem Ausführen einer Operation durch das Rechenwerk 12 und der resultierenden Verringerung der Geschwindigkeit wieder allmählich wieder an.

Die Verwendung von zwei Temperatursensoren verhindert einen Angriff durch Kühlung des Prozessors oder des Rechenwerkes 12 weitgehend, da eine punktuelle Abkühlung physikalisch äußerst diffizil ist.

Statt des im letzten Ausführungsbeispiel verwendeten Komparators kann auch eine Brückenschaltung verwendet werden.

Die in den Ausführungsbeispielen dargestellte Aufteilung der Funktionseinrichtungen des erfindungsgemäßen Prozessors ist nicht zwingend, sondern kann variiert werden. Beispielsweise kann die Takterzeugungseinrichtung einstückig mit dem Rechenwerk ausgeführt sein oder in Form eines von diesen getrennten Bauelementes ausgeführt sein. Ferner kann, wie oben bereits erwähnt wurde, die Zustandseinrichtung, der Energiespeicher, die elektrische Kapazität oder die thermische Kapazität in einem von dem Rechenwerk getrennten Bauteil realisiert sein, mit dem Rechenwerk einstückig ausgeführt sein oder sogar mit diesem noch weitergehend integriert sein. In vielen Fällen werden alle Elemente des erfindungsgemäßen Prozessors, d. h. das Rechenwerk und alle hier der Zustandseinrichtung zugerechneten Komponenten so weit als möglich einstückig ausgeführt sein. Dies reduziert den Herstellungsaufwand und verbessert bei kryptographischen Anwendungen den Schutz vor einer Manipulation. Trotzdem ist auch eine mehrstückige Ausführung möglich und für einige Anwendungen sinnvoll.

Bei den oben beschriebenen Ausführungsbeispielen wird zur Beeinflussung der Geschwindigkeit des Rechenwerkes die Frequenz des Arbeitstaktes des Rechenwerkes verändert. Daneben existieren weitere Möglichkeiten, um die Geschwindigkeit des Rechenwerkes zu verändern. Beispielsweise ist eine Veränderung der Anzahl der Bits, auf die jede einzelne Operation wirkt, denkbar, so daß z. B. in jedem Arbeitstakt nur noch 8 statt 16 Bit gleichzeitig verarbeitet werden. Eine weitere Möglichkeit besteht in der Einführung von "Pausentakten", um die Geschwindigkeit zu verringern.

Die in den Ausführungsbeispielen beschriebene Änderung des Arbeitstaktes auf analoge Weise wird bevorzugt, da sie am einfachsten realisierbar ist und gegenüber Manipulationen eine hohe Sicherheit bietet.

In den Ausführungsbeispielen oben wurde nicht näher auf die konkrete mathematische Form des Zusammenhangs zwischen dem Zustand der Zustandseinrichtung und der Geschwindigkeit des Rechenwerkes eingegangen. Bei diesem Zusammenhang kann es sich um eine einfache Stufenfunktion mit einem oder mehreren Stufen bzw. Schwellen handeln, d. h. daß bei Über- oder Unterschreiten eines bestimmten Zustandes die Geschwindigkeit des Rechenwerkes stufenweise verändert wird. Beispielsweise würde im ersten Ausführungsbeispiel die Takterzeugungseinrichtung 32 eine erste hohe Geschwindigkeit des Rechenwerkes 12 einstellen, wenn die in der elektrischen Kapazität 30 gespeicherte Ladungsmenge unter einer vorbestimmten Schwelle liegt und eine zweite niedrigere Geschwindigkeit des Rechenwerkes 12 einstellen, wenn die Ladungsmenge in der elektrischen Kapazität 30 über der vorbestimmten Schwelle liegt. Dies hat zur Folge, daß die Geschwindigkeit des Rechenwerkes 12 ab dem Ausführen einer bestimmten Anzahl von Operationen von einer ursprünglichen hohen Geschwindigkeit auf eine vorbestimmte niedrigere Geschwindigkeit verringert wird, und daß die Geschwindigkeit des Rechenwerkes nach einer von der Größe der elektrischen Kapazität 30, der Anzahl der ausgeführten Operationen bzw. der in der elektrischen Kapazität 30 gespeicherten Ladungsmenge und der Größe der parallelen Widerstände bzw. der Größe der Leckströme abhängigen Zeit wieder stufenförmig auf die ursprüngliche höhere Geschwindigkeit erhöht wird.

Vorzugsweise ist die Zustandseinrichtung so ausgeführt, daß der Zusammenhang zwischen der Anzahl der durch das Rechenwerk ausgeführten Operationen und der durch die Zustandseinrichtung gesteuerten Geschwindigkeit des Rechenwerkes ein stetiger Zusammenhang ist.

Vorzugsweise ist die Zustandseinrichtung ferner so ausgeführt, daß der Zusammenhang zwischen der Anzahl der durch das Rechenwerk ausgeführten Operationen und der durch die Zustandseinrichtung gesteuerten Geschwindigkeit des Rechenwerkes umgekehrt proportional oder noch besser umgekehrt exponentiell ist. Dies bedeutet beispielsweise bei dem ersten Ausführungsbeispiel, daß die Takterzeugungseinrichtung 32 so aufgebaut ist, daß die Frequenz des von ihr erzeugten Arbeitstaktes für das Rechenwerk 12 umgekehrt proportional oder umgekehrt exponentiell von der in der elektrischen Kapazität 30 gespeicherten Ladungsmenge abhängt, und daß die Ladung der elektrischen Kapazität 30 bei jedem Ausführen einer Operation durch das Rechenwerk um einen vorbestimmten konstanten Wert erhöht wird. Das Rechenwerk 12 wird so während des Ausführens von Operationen kontinuierlich langsamer. Sobald keine Operationen mehr ausgeführt werden, erhöht sich die Geschwindigkeit des Rechenwerkes 12 aufgrund einer Entladung der elektrischen Kapazität allmählich und kontinuierlich wieder bis zur ursprünglichen Geschwindigkeit.

Durch den erfindungsgemäßen Prozessor kann es wirksam unterbunden werden, daß Angriffe, die eine Vielzahl von kryptographischen Berechnungen bzw. geheimen Operationen benötigen, in kurzer Zeit durchgeführt werden können. Durch programmierbare Parameter, z. B. multiplikative Faktoren für das Verhältnis zwischen Energie im Speicher und Berechnungsgeschwindigkeit oder Menge der Energiezuführung, kann bei der Entwicklung einer Applikation bzw. Anwendung eine optimale -Sicherheitsfunktion aktiviert werden: Applikationen mit langen Zeitabständen zwischen den Berechnungen können einen großen Faktor wählen, Applikationen mit zeitlich dicht aufeinanderfolgenden Berechnungen können einen speziell abgestimmten Wert wählen, so daß die legale Verwendung unmaßgeblich beeinflußt wird, jedoch eine schnellere Nutzung für einen Angriff nicht möglich ist.

In den Ausführungsbeispielen wurde mehrfach auf eine Anwendung des erfindungsgemäßen Prozessors bei kryptographischen Berechnungen bzw. Operationen Bezug genommen. Darüber hinaus ist die Erfindung jedoch auch bei anderen Anwendungen einsetzbar. Als Beispiel sei ein Prozessor mit einer in der Regel geringen Auslastung genannt, der von Zeit zu Zeit eine hohe Anzahl von Operationen in kurzer Zeit ausführen soll. Für diese Anwendung wird die Zustandseinrichtung 14 so ausgeführt, daß die durch die Zustandseinrichtung 14 gesteuerte Geschwindigkeit des Rechenwerkes 12 um so höher ist, je mehr Operationen durch das Rechenwerk 12 -ausgeführt werden. Beispielsweise wird eine Takterzeugungseinrichtung entsprechend der des ersten Ausführungsbeispieles so ausgeführt, daß die Frequenz des von ihr erzeugten Arbeitstaktes für das Rechenwerk anwächst, wenn die in einer elektrischen Kapazität, die der elektrischen Kapazität 30 entspricht, gespeicherte Ladungsmenge, die bei jedem Ausführen einer Operation durch das Rechenwerk erhöht wird, anwächst. Dann folgt, daß das Rechenwerk eine oder wenige Operationen mit einer ersten niedrigen vorbestimmten Geschwindigkeit ausführt, und daß die Geschwindigkeit des Rechenwerkes beim Ausführen von Operationen kontinuierlich bis zu einer zweiten vorbestimmten maximalen Geschwindigkeit ansteigt. Ein solcher Prozessor kann bei der genannten Anwendung eine erhebliche Energieersparnis realisieren, ohne daß ein Betriebssystem des Prozessors Energiesparfunktionen enthalten muß. Es kommen die allgemeinen ökonomischen und ökologischen Vorteile einer Energieersparnis zum Tragen, die beispielsweise bei einer Energieversorgung des Prozessors aus einer Batterie oder einem Akkumulator besonders schwer wiegen können. Darüber hinaus existieren weitere Vorteile, beispielsweise kann unter Umständen eine Kühleinrichtung für den Prozessor kleiner dimensioniert werden, wenn feststeht, daß eine hohe Geschwindigkeit des Rechenwerkes und damit ein hoher Energieumsatz immer nur für kurze Zeit erforderlich sind.

Vorrichtung und Verfahren zum Ausführen von Operationen mit einer einstellbaren Geschwindigkeit

### Bezugszeichenliste

- 10: Prozessor
- 12: Rechenwerk
- 14: Zustandseinrichtung
- 16: Eingang
- 18: Ausgang
- 20: Verbindungseinrichtung
- 22: Verbindungseinrichtung
- 30: Einrichtung mit einer elektrischen Kapazität
- 32: Takterzeugungseinrichtung
- 34: Einrichtung zum Laden
- 36: Einrichtung zum Steuern
- 38: Einrichtung zum Takten
- 50: Einrichtung mit einer thermischen Kapazität
- 54: Einrichtung zum Heizen
- 56: Einrichtung zum Steuern
- 58: Einrichtung zum Takten
- 70: Temperatursensor
- 72: Komparator
- 74: Einrichtung zum Leiten des ersten Temperatursignales
- 76: Einrichtung zum Leiten des zweiten Temperatursignales
- 78: Einrichtung zum Leiten des Differenzsignales
- 80: Einrichtung zum Takten

## Patentansprüche

1. Prozessor mit folgenden Merkmalen:
einem Rechenwerk (12) zum Ausführen einer kryptographischen Operation mit einer steuerbaren Geschwindigkeit; und
einer Zustandseinrichtung (14), die einen Zustand aufweist, wobei die Geschwindigkeit des Rechenwerkes (12) abhängig von dem Zustand der Zustandseinrichtung (14) steuerbar ist, wobei die Zustandseinrichtung (14) ausgebildet ist, um ansprechend auf ein Ausführen der kryptographischen Operation durch das Rechenwerk (12) eine Erhöhung einer Variable, durch die der Zustand der Zustandseinrichtung (14) darstellbar ist, zu bewirken, und um die Geschwindigkeit des Rechenwerkes (12) ansprechend auf die Erhöhung der Variable aufgrund des Ausführens der kryptographischen Operation zu verringern.

2. Prozessor gemäß Anspruch 1, bei dem die Zustandseinrichtung (14) kontinuierliche Zustände aufweist.

3. Prozessor gemäß Anspruch 1 oder 2, bei dem die Zustandseinrichtung (14) so aufgebaut ist, daß der Zustand der Zustandseinrichtung (14) ferner eine Funktion der Zeit ist.

4. Prozessor gemäß Anspruch 1 oder 2, bei dem die Zustandseinrichtung (14) so aufgebaut ist, daß sich der Zustand der Zustandseinrichtung (14), wenn das Rechenwerk (12) keine Operationen ausführt, in eine Richtung ändert, welche der Richtung der auf ein Ausführen der kryptographischen Operation durch das Rechenwerk (12) ansprechenden Änderung entgegengesetzt ist.

5. Prozessor gemäß einem der Ansprüche 1 bis 4, bei dem die Zustandseinrichtung so aufgebaut ist, daß die Geschwindigkeit des Rechenwerkes (12) umgekehrt proportional zu der Variable ist, durch die der Zustand der Zustandseinrichtung darstellbar ist.

6. Prozessor gemäß einem der Ansprüche 1 bis 4, bei dem die Zustandseinrichtung so aufgebaut ist, daß die Geschwindigkeit des Rechenwerkes (12) umgekehrt exponentiell von der Variable abhängt, durch die der Zustand der Zustandseinrichtung darstellbar ist.

7. Prozessor gemäß einem der Ansprüche 1 bis 6, bei dem die Zustandseinrichtung einen Kondensator (30) umfaßt und der Zustand ein Ladezustand des Kondensators (30) ist.

8. Prozessor gemäß einem der Ansprüche 1 bis 6, bei dem die Zustandseinrichtung eine Einrichtung (50) mit einer Wärmekapazität umfaßt und der Zustand eine Temperatur der Einrichtung (50) ist.

9. Prozessor gemäß Anspruch 8, bei dem die Einrichtung (50) mit einer Wärmekapazität ferner eine zweite Temperatur aufweist, wobei die Geschwindigkeit des Rechenwerkes (12) ferner abhängig von der zweiten Temperatur steuerbar ist.

10. Prozessor gemäß einem der Ansprüche 1 bis 9, bei dem eine Frequenz eines Arbeitstaktes des Rechenwerkes (12) abhängig von dem Zustand der Zustandseinrichtung (14) steuerbar ist.

11. Prozessor gemäß einem der Ansprüche 1 bis 9, bei dem eine Anzahl von Bits, auf die die kryptographische Operation im Rechenwerk (12) wirkt, abhängig von dem Zustand der Zustandseinrichtung (14) steuerbar ist.

12. Prozessor gemäß einem der Ansprüche 1 bis 11, bei dem die kryptographische Operation eine kryptographische Operation zur Verschlüsselung oder Entschlüsselung von Informationen ist.

13. Verfahren zum Ausführen einer kryptographischen Operation in einem Prozessor (10) mit einer einstellbaren Geschwindigkeit, mit folgenden Schritten:
Erhöhen einer Variable, die einen Zustand einer Zustandseinrichtung darstellt, ansprechend auf ein Ausführen der kryptographischen Operation durch ein Rechenwerk (12) des Prozessors ; und
Verringern der Geschwindigkeit des Rechenwerkes (12) ansprechend auf das Erhöhen der Variable aufgrund des Ausführens der kryptographischen Operation.

## Claims

1. A processor comprising:
a computation unit (12) for executing a cryptographic operation at a controllable speed; and
a state unit (14), which has a state, wherein the speed of the computation unit (12) is controllable according to the state of the state unit (14), wherein the state unit is designed to cause an increase of a variable by which the state of the state unit (14) can be represented in response to an execution of a cryptographic operation by the computation unit (12), and to decrease the speed of the computation unit in response to the increase of the variable due to the execution of the cryptographic operation.

2. The processor according to claim 1, wherein the state unit (14) has continuous states.

3. The processor according to claim 1 or 2, wherein the state unit (14) is so designed that the state of the state unit (14) is also a function of time.

4. The processor according to claim 1 or 2, wherein the state unit (14) is so designed that, when the computation unit (12) performs no operations, the state of the state unit (14) changes in a direction which is opposite to the direction of change in response to an execution of the cryptographic operation by the computation unit (12).

5. The processor according to one of the claims 1 to 4, wherein the state unit is so designed that the speed of the computation unit (12) is inversely proportional to the variable by which the state of the state unit can be represented.

6. The processor according to one of the claims 1 to 4, wherein the state unit is so designed that the speed of the computation unit (12) is inversely exponential to the variable by which the state of the state unit can be represented.

7. The processor according to one of the claims 1 to 6, wherein the state unit includes a capacitor (30) and the state is a charge state of the capacitor.

8. The processor according to one of the claims 1 to 6, wherein the state unit (14) includes a unit (50) with a thermal capacitance and the state is a temperature of the unit (50).

9. The processor according to claim 8, wherein the unit (50) with a thermal capacitance also has a second temperature, wherein the speed of the computation unit (12) can also be controlled according to the second temperature.

10. The processor according to one of the claims 1 to 9, wherein a frequency of a clock rate of the computation unit (12) can be controlled according to the state of the state unit (14).

11. The processor according to one of the claims 1 to 9, wherein a number of bits which are processed by the cryptographic operation in the computation unit (12) can be controlled according to the state of the state unit (14).

12. The processor according to one of the claims 1 to 11, wherein the cryptographic operation is a cryptographic operation for encrypting or decrypting information.

13. A method for executing a cryptographic operation in a processor (10) at a variable speed, comprising the following steps:
increasing a variable which represents a state of a state unit in response to an execution of the cryptographic operation by a computation unit (12) of the processor; and
decreasing the speed of the computation unit (12) in response to the increase of the variable due to the execution of the cryptographic operation.

## Revendications

1. Processeur comportant les éléments caractéristiques suivants :
une unité de calcul (12) destinée à effectuer une opération cryptographique à une vitesse qui peut être commandée ; et
un dispositif d'état (14) qui comporte un état, la vitesse de l'unité de calcul (12) pouvant être commandée en fonction de l'état du dispositif d'état (14), le dispositif d'état (14) étant conformé pour générer, en réponse à une opération cryptographique effectuée par l'unité de calcul (12), une augmentation d'une variable permettant de représenter l'état du dispositif d'état (14) et pour réduire la vitesse de l'unité de calcul (12) en réponse à l'augmentation de la variable à la suite de l'opération cryptographique.

2. Processeur selon la revendication 1, dans lequel le dispositif d'état (14) comporte des états continus.

3. Processeur selon la revendication 1 ou 2, dans lequel le dispositif d'état (14) est structurée de telle sorte que l'état du dispositif d'état (14) est en outre une fonction du temps.

4. Processeur selon la revendication 1 ou 2, dans lequel le dispositif d'état (14) est structurée de telle sorte que l'état du dispositif d'état (14), lorsque l'unité de calcul (12) n'effectue pas d'opération, varie dans un sens qui est opposé au sens de la variation en réponse à une opération cryptographique effectuée par l'unité de calcul (12).

5. Processeur selon l'une des revendications 1 à 4, dans lequel le dispositif d'état est structuré de telle sorte que la vitesse de l'unité de calcul (12) est inversement proportionnelle à la variable permettant de représenter l'état du dispositif d'état.

6. Processeur selon l'une des revendications 1 à 4, dans lequel le dispositif d'état est structuré de telle sorte que la vitesse de l'unité de calcul (12) dépend de façon inversement exponentielle de la variable permettant de représenter l'état du dispositif d'état.

7. Processeur selon l'une des revendications 1 à 6, dans lequel le dispositif d'état comporte un condensateur (30) et l'état est un état de charge du condensateur (30).

8. Processeur selon l'une des revendications 1 à 6, dans lequel le dispositif d'état comporte un dispositif (50) ayant une capacité thermique et l'état est une température du dispositif (50).

9. Processeur selon la revendication 8, dans lequel le dispositif (50) ayant une capacité thermique a en outre une deuxième température, la vitesse de l'unité de calcul (12) pouvant en outre être commandée en fonction de la deuxième température.

10. Processeur selon l'une des revendications 1 à 9, dans lequel une fréquence d'une horloge de travail de l'unité de calcul (12) peut être commandée en fonction de l'état du dispositif d'état (14).

11. Processeur selon l'une des revendications 1 à 9, dans lequel un nombre de bits, sur lequel agit l'opération cryptographique dans l'unité de calcul (12), peut être commandé en fonction de l'état du dispositif d'état (14).

12. Processeur selon l'une des revendications 1 à 11, dans lequel l'opération cryptographique est une opération cryptographique de chiffrement ou de déchiffrement d'informations.

13. Procédé permettant d'effectuer une opération cryptographique dans un processeur (10) ayant une vitesse réglable, ledit procédé comportant les étapes suivantes consistant à :
augmenter une variable, qui représente un état d'un dispositif d'état, en réponse à une opération cryptographique effectuée par une unité de calcul (12) du processeur ; et
réduire la vitesse de l'unité de calcul (12) en réponse à l'augmentation de la variable à la suite de l'opération cryptographique.
